(19) Europäisches Patentamt
European Patent Office
Office européen des brevets

(11) **EP 4 773 239 A1**

(12) **EUROPEAN PATENT APPLICATION**
published in accordance with Art. 153(4) EPC

(43) Date of publication:
**08.07.2026 Bulletin 2026/28**

(21) Application number: **23950907.8**

(22) Date of filing: **13.10.2023**

(51) International Patent Classification (IPC):
*H01M 4/525* (2010.01)   *H01M 4/505* (2010.01)
*C01G 53/00* (2025.01)   *H01M 4/02* (2006.01)

(52) Cooperative Patent Classification (CPC):
**C01G 53/00; H01M 4/02; H01M 4/505; H01M 4/525;**
**Y02E 60/10**

(86) International application number:
**PCT/KR2023/015839**

(87) International publication number:
**WO 2025/048032 (06.03.2025 Gazette 2025/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **01.09.2023 KR 20230116219**

(71) Applicant: Posco Future M Co., Ltd.
**Pohang-si, Gyeongsangbuk-do 37918 (KR)**

(72) Inventors:
• **KANG, Gyeongcheol**
**Pohang-si, Gyeongsangbuk-do 37918 (KR)**

• **KIM, Jeong Han**
**Pohang-si, Gyeongsangbuk-do 37918 (KR)**
• **KIM, Jae Bum**
**Pohang-si, Gyeongsangbuk-do 37918 (KR)**
• **KIM, Gi Beom**
**Pohang-si, Gyeongsangbuk-do 37918 (KR)**
• **LEE, Byong June**
**Pohang-si, Gyeongsangbuk-do 37918 (KR)**
• **KIM, Nam Ho**
**Pohang-si, Gyeongsangbuk-do 37918 (KR)**
• **KIM, Minjae**
**Pohang-si, Gyeongsangbuk-do 37918 (KR)**

(74) Representative: **Meissner Bolte Partnerschaft**
**mbB**
**Patentanwälte Rechtsanwälte**
**Postfach 86 06 24**
**81633 München (DE)**

(54) **CATHODE ACTIVE MATERIAL FOR LITHIUM SECONDARY BATTERY, AND METHOD FOR PRODUCING SAME**

(57)    The present invention relates to a positive electrode active material for a lithium secondary battery and a method for manufacturing the same. More specifically, the present invention relates to a positive electrode active material for a lithium secondary battery, and a method for manufacturing the same, in which production yield and production efficiency are improved by applying a low-temperature first calcination at 400°C or lower to a precursor mixture for the positive electrode active material.

FIG. 1

[Fig. 1]

<Weight change of the positive electrode active material during the calcination reaction>

EP 4 773 239 A1

**Description**

[Technical Field]

The present invention relates to a positive electrode active material for lithium secondary batteries and a method for manufacturing the same. More specifically, the present invention relates to a positive electrode active material for lithium secondary batteries, and a method for manufacturing the same, in which production yield and production efficiency are enhanced by applying a low-temperature first calcination at 400°C or lower to a precursor mixture for the positive electrode active material.

[Background Art]

In conventional production processes for positive electrode active materials for lithium secondary batteries, a one-step secondary calcination process using a roller hearth kiln (RHK) is generally employed. In such conventional one-step processes, even when the calcination container is filled to its maximum capacity with product, the volume of the material gradually decreases from the middle of the process and ultimately decreases to less than 50% of the container volume. Specifically, once the precursor moisture and the moisture contained in lithium hydroxide are removed in the early stage inside the calcination furnace, the moisture-removed precursor begins to react with lithium, resulting in a reduction in volume. Consequently, in the later stage of the calcination process, the volume of the product becomes less than half of the initial loading volume. That is, because the full volume of the calcination container cannot be utilized, production efficiency is reduced.

[Detailed Description of the Invention]

[Technical Problem]

A technical problem to be solved by the present invention is to provide a positive electrode active material in which productivity and moisture content are improved by performing a first calcination at a temperature of 400°C or lower to sufficiently reduce the volume of the precursor for the positive electrode active material, loading the calcination container to its maximum capacity with the precursor, and then performing a second calcination.
Another technical problem to be solved by the present invention is to provide a method for manufacturing a positive electrode active material having the above advantages.

[Technical Solution]

According to one embodiment of the present invention, the positive electrode active material may satisfy the following Equation 1:

$$[\text{Equation 1}]$$

$$3.35 \leq (\text{crystallite size} / \text{BET}) / 100 \leq 3.65.$$

According to another embodiment of the present invention, a method for manufacturing a positive electrode active material may include:
preparing a mixture by mixing a metal hydroxide precursor and lithium hydroxide; first calcining the mixture at a temperature in a range from 350°C to 400°C to obtain a pre-calcined material; and second calcining the pre-calcined material at a temperature in a range from 700°C to 900°C to obtain a lithium metal oxide that satisfies the following Equation 1:

$$[\text{Equation 1}]$$

$$3.35 \leq (\text{crystallite size} / \text{BET}) / 100 \leq 3.65.$$

[Effects of the Invention]

According to one embodiment of the present invention, the positive electrode active material can exhibit low moisture content and high productivity by performing the first calcination of the above-described precursor for the positive electrode active material at a temperature of 400°C or lower.

According to another embodiment of the present invention, the method for manufacturing a positive electrode active material can provide a positive electrode active material having low moisture content and high productivity by performing the first calcination of the above-described precursor at a temperature of 400°C or lower.

[Brief Description of the Drawings]

FIG. 1 is a graph showing the weight change of the positive electrode active material during the calcination reaction in a manufacturing process of a positive electrode active material according to one embodiment of the present invention.
FIG. 2 illustrates the morphology of a precursor mixture (having 0% IG loss) for a positive electrode active material according to one embodiment of the present invention.
FIG. 3 illustrates the morphology of a precursor for a positive electrode active material after pre-calcination at 100°C (having 8% IG loss) according to one embodiment of the present invention.
FIG. 4 illustrates the morphology of a precursor for a positive electrode active material after pre-calcination at 250°C (having 15% IG loss) according to one embodiment of the present invention.
FIG. 5 illustrates the morphology of a precursor for a positive electrode active material after pre-calcination at 350°C (having 22% IG loss) according to one embodiment of the present invention.
FIG. 6 illustrates the morphology of a precursor for a positive electrode active material after pre-calcination at 400°C (having 27% IG loss) according to one embodiment of the present invention.
FIG. 7 illustrates the morphology of a precursor for a positive electrode active material after pre-calcination at 500°C (having 27% IG loss) according to one embodiment of the present invention.

[Best Mode for Carrying Out the Invention]

In the present specification, the terms "first," "second," and "third," and the like, are used to describe various portions, components, regions, layers, and/or sections, but are not limited thereto. These terms are used only for distinguishing one portion, component, region, layer, or section from another portion, component, region, layer, or section. Thus, a "first" portion, component, region, layer, or section described below may be referred to as a "second" portion, component, region, layer, or section within a scope that does not depart from the spirit of the present invention.

In the present specification, when a part is described as "comprising/including/containing" a certain component, this means, unless expressly stated otherwise, that the part may further include other components in addition to the specified component, and does not exclude the presence of other components.

In the present specification, the technical terms used herein are provided merely for referring to specific embodiments and are not intended to limit the present invention. Singular expressions used herein also include plural forms unless the context clearly indicates otherwise. The term "comprising" as used in the specification specifies the presence of stated characteristics, regions, integers, steps, operations, elements, and/or components, but does not preclude the presence or addition of one or more other characteristics, regions, integers, steps, operations, elements, and/or components.

In the present specification, the term "combinations thereof" included in a Markush expression refers to one or more mixtures or combinations selected from the group consisting of the components listed in the Markush expression, and means that any one or more selected from the group may be included.

In the present specification, when a portion is described as being "on" or "over/above" another portion, it may be directly on or above the other portion, or another portion may be interposed therebetween. In contrast, when a portion is described as being "directly on" another portion, no intervening portion is present between them.

In the present specification, D10 refers to the particle size at 10% on the cumulative size-distribution curve on a volume basis; D50 refers to the particle size at 50% by volume; D90 refers to the particle size at 90% by volume; and D99 refers to the particle size at 99% by volume.

Unless otherwise defined, all technical and scientific terms used herein have the same meaning as commonly understood by those skilled in the art to which the present invention pertains. Terms that are ordinarily used in dictionaries shall be interpreted in a manner consistent with their use in the relevant technical literature and in the context of the present disclosure, and shall not be interpreted in an idealized or overly formal sense unless specifically defined herein.

Further, unless otherwise indicated, "%" refers to weight percent (wt%), and 1 ppm means 0.0001 wt%.

Hereinafter, embodiments of the present invention will be described in detail so that those skilled in the art may readily carry out the present invention. However, the present invention may be embodied in various different forms, and is not limited to the embodiments described herein.

According to one embodiment, the positive electrode active material for a lithium secondary battery may be a positive electrode active material that satisfies the following Equation 1:

$$[\text{Equation 1}]$$

$$3.35 \leq (\text{crystallite size} / \text{BET}) / 100 \leq 3.65.$$

In Equation 1, the crystallite size refers to a value measured by X-ray diffraction (XRD).

In Equation 1, "BET" refers to the specific surface area measured by the BET method.

In one embodiment, the value of (crystallite size / BET) / 100 for the positive electrode active material may be in a range from 3.35 to 3.65. More specifically, the value may be in a range from 3.4 to 3.64. Even more specifically, the value may be in a range from 3.45 to 3.63.

When the value of (crystallite size / BET) / 100 is within the above-described range, the discharge capacity and charge efficiency may be improved. In contrast, when the value deviates from the range, the total amount of residual lithium may increase, and the residual lithium may act as an impurity, causing gelation during the preparation of the positive electrode slurry, thereby making uniform slurry formation difficult. This may also increase gas generation during battery operation, leading to reduced stability and long-term cycle life. In addition, an increase in specific surface area may lead to increased side reactions between the residual lithium and the electrolyte.

In one embodiment, the BET specific surface area of the positive electrode active material may be 0.33 $m^2$/g or greater. More specifically, it may be 0.34 $m^2$/g or greater. Even more specifically, it may be in a range from 0.34 $m^2$/g to 0.40 $m^2$/g, from 0.34 $m^2$/g to 0.38 $m^2$/g, or from 0.34 $m^2$/g to 0.36 $m^2$/g.

When the BET specific surface area of the positive electrode active material is within the above range, migration of surface lithium (Li) may occur. In contrast, when the BET specific surface area deviates from the range, the specific surface area increases excessively, resulting in increased side reactions between the residual lithium and the electrolyte.

In one embodiment, the crystallite size of the positive electrode active material may be in a range from 122 nm to 138 nm. More specifically, the crystallite size may be in a range from 123 nm to 138 nm, from 123 nm to 135 nm, from 123 nm to 130 nm, or from 123 nm to 125 nm.

When the crystallite size of the positive electrode active material is within the above range, wettability during electrode fabrication may be improved and lithium-ion conductivity may increase. In contrast, when the crystallite size exceeds the upper limit of the range, the crystallites may become overly coarse, resulting in reduced lithium-ion conductivity. When the crystallite size falls below the lower limit of the range, the crystallites may become overly fine, causing particle breakage and unexpected side reactions due to increased specific surface area.

In one embodiment, the moisture content of the positive electrode active material may be 3700 ppm or less. More specifically, the moisture content may be in a range from 1000 ppm to 3700 ppm, or from 1050 ppm to 3500 ppm.

When the moisture content of the lithium metal oxide is within the above range, impurities such as lithium oxide species remaining on the active material surface may be reduced, thereby lowering the resistance layer formed at the surface.

In one embodiment, the positive electrode active material may satisfy the following Equation 2:

$$[\text{Equation 2}]$$

$$3.35 \leq (\text{BET} / \text{D50}) \times 100 \leq 3.80.$$

The value of (BET / D50) × 100 may be in a range from 3.35 to 3.80. More specifically, the value may be in a range from 3.37 to 3.75, from 3.40 to 3.70, from 3.43 to 3.67, or from 3.47 to 3.64.

In Equation 2, "BET" refers to the specific surface area measured by the BET method.

In Equation 2, "D50" refers to the average particle diameter (D50) of the positive electrode active material.

When the value of (BET / D50) × 100 is within the above-described range, wettability during electrode fabrication may be improved, and lithium-ion conductivity may be enhanced. In contrast, when the value exceeds the upper limit of the range, excessive specific surface area may cause unexpected side reactions. When the value falls below the lower limit of the range, lithium-ion conductivity may decrease.

In one embodiment, the total content of residual lithium by-products in the positive electrode active material may be 0.92 wt% or less based on the total weight of the positive electrode active material, and the positive electrode active material may include LiOH and $Li_2CO_3$ as the residual lithium by-products. More specifically, the total content of the residual lithium by-products may be in a range from 0.91 wt% to 0.92 wt%.

When the total content of residual lithium by-products is within the above range, side reactions between the residual lithium and the electrolyte may be reduced while compensating for lithium deficiency in the active material.

In one embodiment, the molar content of nickel among the transition metals included in the positive electrode active material may be 80 mol% or greater.

According to another embodiment, a method for manufacturing a positive electrode active material for a lithium secondary battery may include:

preparing a mixture by mixing a metal hydroxide precursor and lithium hydroxide; first calcining the mixture at a temperature in a range from 350°C to 400°C to obtain a pre-calcined material; and second calcining the pre-calcined material at a temperature in a range from 700°C to 900°C to obtain a lithium metal oxide that satisfies the following Equation 1:

$$[\text{Equation 1}]$$

$$3.35 \leq (\text{crystallite size} / \text{BET}) / 100 \leq 3.65.$$

When the first calcination temperature is within the above-described range, the size of the primary particles may decrease and the BET specific surface area may increase, thereby improving rate capability. In addition, not only dehydration of lithium hydroxide but also dehydration of the metal hydroxide precursor may occur, increasing the ignition loss and significantly reducing the volume of the precursor mixture. As a result, the amount of the precursor mixture that can be loaded into the calcination container may be maximized, thus improving productivity by fully utilizing the volume of the calcination container.

In contrast, when the first calcination temperature exceeds the upper limit of the above range, the specific surface area of the obtained pre-calcined material may decrease, increasing crystallinity and decreasing specific surface area of the final positive electrode active material, resulting in deterioration of electrochemical performance such as discharge capacity and rate capability. Moreover, $Li_2O$ produced after dehydration of lithium hydroxide reacts with $CO_2$ to form lithium by-products such as $Li_2CO_3$, and the amount of the lithium by-products tends to increase as the first calcination temperature increases beyond the upper limit. This may result in increased residual lithium by-products. In addition, when the first calcination temperature falls below the lower limit of the above range, dehydration of lithium hydroxide may occur, but dehydration of the metal hydroxide precursor may not sufficiently proceed, preventing sufficient reduction in the volume of the precursor mixture. Consequently, the volume of the calcination container cannot be fully utilized, resulting in reduced productivity.

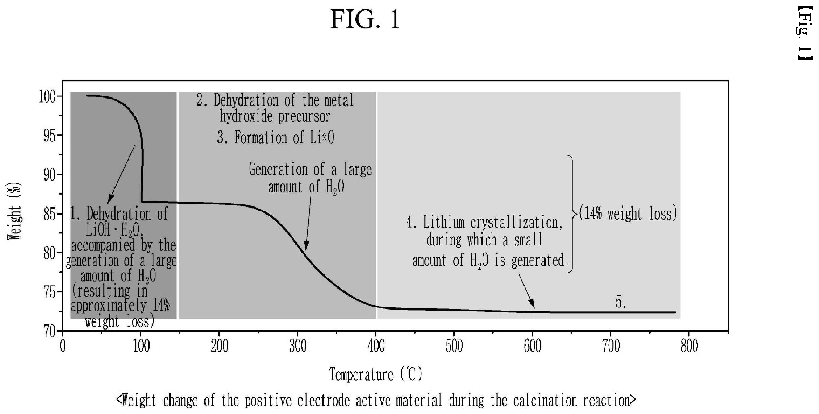

The dehydration behavior and weight change depending on the calcination temperature are shown in FIG. 1.

In the second calcination step, the second calcination temperature may be in a range from 750°C to 900°C. More specifically, the temperature may be in a range from 750°C to 790°C. Even more specifically, the temperature may be in a range from 770°C to 790°C.

When the second calcination temperature is within the above range, calcination of the layered positive electrode active material containing the above-described nickel content may proceed appropriately. In contrast, when the temperature exceeds the upper limit of the above range, over-calcination may occur, leading to structural instability caused by Li/Ni cation mixing. When the temperature falls below the lower limit, formation of the layered structure may be insufficient, preventing the desired electrochemical performance from being achieved.

In another embodiment, the value of (crystallite size / BET) / 100 for the positive electrode active material may be in a range from 3.35 to 3.65. More specifically, the value may be in a range from 3.40 to 3.64, or from 3.45 to 3.63.

When the value is within the above range, discharge capacity and charge efficiency may be improved. In contrast, when the value deviates from the range, the total residual lithium content may increase, and the residual lithium may act as an impurity, causing gelation during slurry preparation and hindering uniform slurry formation. Moreover, gas generation during battery operation may increase, reducing stability and long-term cycle life. An increase in specific surface area may also lead to increased side reactions between the residual lithium and the electrolyte.

In another embodiment, the positive electrode active material may satisfy the following Equation 2:

$$[\text{Equation 2}]$$

$$3.35 \leq (\text{BET} / \text{D50}) \times 100 \leq 3.80.$$

The value of (BET / D50) × 100 may be in a range from 3.35 to 3.80. More specifically, the value may be in a range from 3.37 to 3.75, from 3.40 to 3.70, from 3.43 to 3.67, or from 3.47 to 3.64.

In Equation 2, "BET" refers to the specific surface area measured by the BET method, and "D50" refers to the average particle diameter (D50) of the positive electrode active material.

When the value of (BET / D50) × 100 is within the above range, wettability during electrode fabrication may improve and lithium-ion conductivity may increase. In contrast, when the value exceeds the upper limit of the range, excessive specific surface area may cause unexpected side reactions. When the value falls below the lower limit, lithium-ion conductivity may decrease.

In another embodiment, the ignition loss after the first calcination may be in a range from 22% to 27%. More specifically, the ignition loss may be in a range from 25% to 27%. The ignition loss may be defined as the weight reduction of the active material before and after calcination.

When the ignition loss is within the above range, it may be confirmed that calcination has sufficiently progressed to an appropriate extent, and the values of (crystallite size / BET) / 100 and (BET / D50) × 100 may be within the above ranges. In contrast, when the ignition loss exceeds the upper limit of the range, over-calcination may result in structural instability due to Li/Ni cation mixing. When the ignition loss is below the lower limit of the range, the layered structure may not be sufficiently formed, resulting in reduced electrochemical performance.

In another embodiment, the BET specific surface area of the pre-calcined material formed after the first calcination may be 20.5 $m^2/g$ or greater. More specifically, it may be 22.0 $m^2/g$ or greater, 24.0 $m^2/g$ or greater, in a range from 24.5 $m^2/g$ to 30.0 $m^2/g$, in a range from 24.5 $m^2/g$ to 27.5 $m^2/g$, or in a range from 24.5 $m^2/g$ to 25.5 $m^2/g$.

When the BET specific surface area of the pre-calcined material is within the above range, the wettability of the active material during electrode fabrication may improve and lithium-ion conductivity may increase. In contrast, when the BET specific surface area deviates from the range, side reactions with the electrolyte may excessively increase or, conversely, reactivity may be significantly reduced.

In another embodiment, the first calcination may be performed in an atmosphere having an oxygen concentration of 21% and a carbon dioxide ($CO_2$) concentration of 10 ppm or less. When the first calcination is performed in an atmosphere having 21% oxygen and a $CO_2$ concentration of 400 ppm or less, the reaction between residual lithium and $CO_2$ may be suppressed, thereby improving process safety while appropriately oxidizing the active material and enabling the active material to meet the above-described moisture content range.

In another embodiment, the first calcination step may be performed for a duration in a range from 8 hours to 12 hours. More specifically, the duration may be 8 to 10 hours, 8 to 9 hours, or about 8 hours.

When the duration of the first calcination falls within the above range, moisture content may be reduced economically and loading amount may be increased.

In another embodiment, the second calcination step may be performed for a duration in a range from 15 hours to 22 hours. More specifically, the duration may be in a range from 16 hours to 20 hours, from 17 hours to 19 hours, or from 17 hours to 18 hours.

In another embodiment, the molar content of nickel among the transition metals included in the metal hydroxide precursor may be 80 mol% or greater.

[Modes for Carrying Out the Invention]

Preferred preparation examples, embodiments, comparative examples, and experimental examples according to the present invention are described below. However, the following embodiments are merely preferred embodiments of the present invention, and the present invention is not limited to these embodiments.

**Embodiment 1 - Preparation of Positive Electrode Active Material (First Calcination at 400°C)**

A precursor having a composition of $Ni_{0.88}Co_{0.05}Mn_{0.07}(OH)_2$ was prepared, and lithium hydroxide monohydrate ($LiOH \cdot H_2O$, Samjeon Chemical, battery grade) was uniformly mixed with the precursor to prepare a mixture. In this case, the molar ratio of lithium (Li) to the total metals excluding lithium (Me), i.e., Li/Me, was designed to be 1.07.

The mixture was introduced into a calcination furnace under an atmosphere containing 21% oxygen and 5 ppm or less of carbon dioxide, and pre-calcination was performed at 400°C for 10 hours to prepare a pre-calcined material. The pre-calcined material was then subjected to second calcination at 770°C for 18 hours to obtain a positive electrode active material.

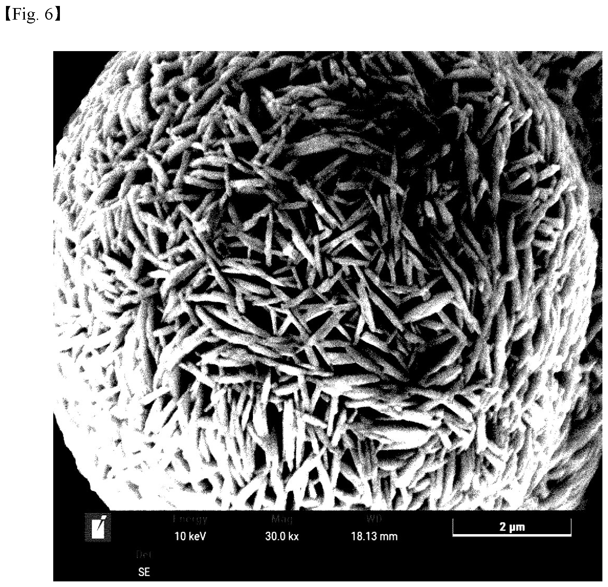

The morphology of the pre-calcined material (precursor) obtained in Embodiment 1 is shown in FIG. 6.

**Embodiment 2 - Preparation of Positive Electrode Active Material (First Calcination at 350°C)**

A positive electrode active material for a lithium secondary battery was prepared in the same manner as in Embodiment 1, except that the first calcination temperature was changed to 350°C.

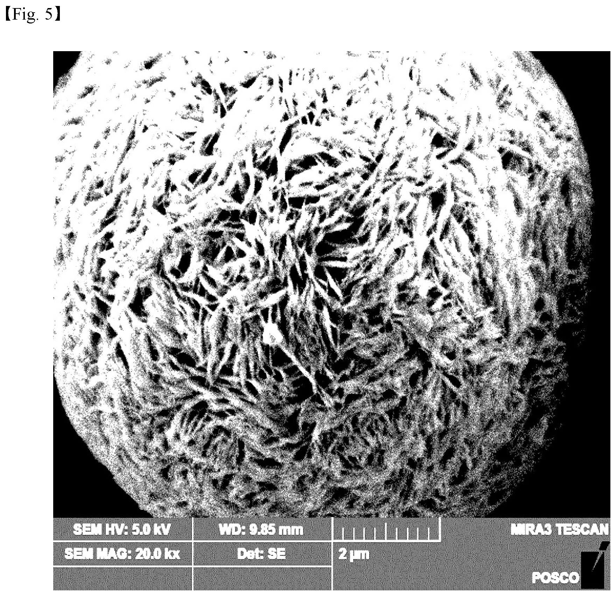

The morphology of the pre-calcined material (precursor) obtained in Embodiment 2 is shown in FIG. 5.

**Comparative Example 1 - Preparation of Positive Electrode Active Material (First Calcination at 500°C)**

A positive electrode active material for a lithium secondary battery was prepared in the same manner as in Embodiment 1, except that the first calcination temperature was changed to 500°C.

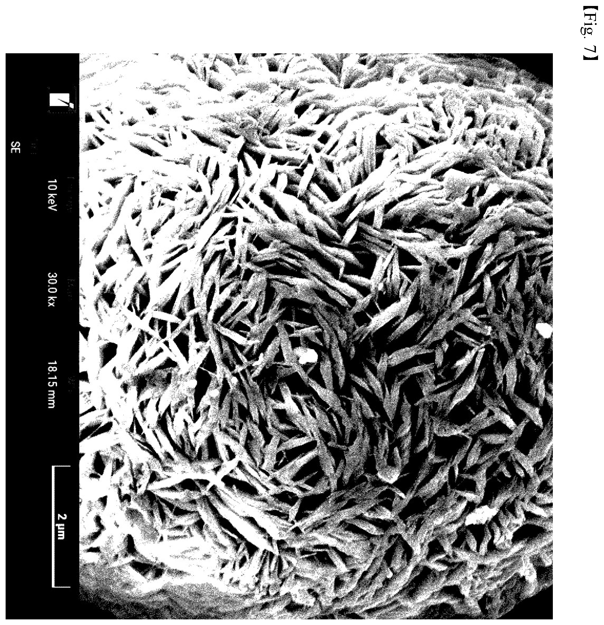

The morphology of the pre-calcined material (precursor) obtained in Comparative Example 1 is shown in FIG. 7.

**Comparative Example 2 - Preparation of Positive Electrode Active Material (First Calcination at 250°C)**

A positive electrode active material for a lithium secondary battery was prepared in the same manner as in Embodiment 1, except that the first calcination temperature was changed to 250°C.

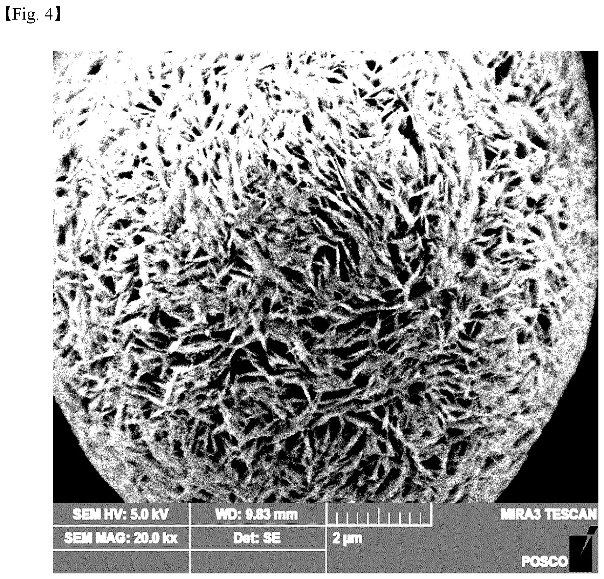

The morphology of the pre-calcined material (precursor) obtained in Comparative Example 2 is shown in FIG. 4.

**Comparative Example 3 - Preparation of Positive Electrode Active Material (First Calcination at 100°C)**

A positive electrode active material for a lithium secondary battery was prepared in the same manner as in Embodiment 1, except that the first calcination temperature was changed to 100°C.

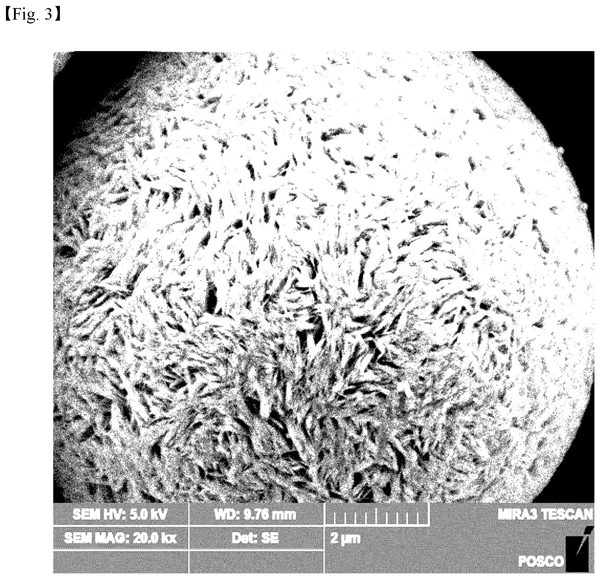

The morphology of the pre-calcined material (precursor) obtained in Comparative Example 3 is shown in FIG. 3.

**Comparative Example 4 - Preparation of Positive Electrode Active Material (Second Calcination Only)**

A positive electrode active material for a lithium secondary battery was prepared under the same conditions as in Embodiment 1, except that the first calcination was not performed and only the second calcination was carried out.

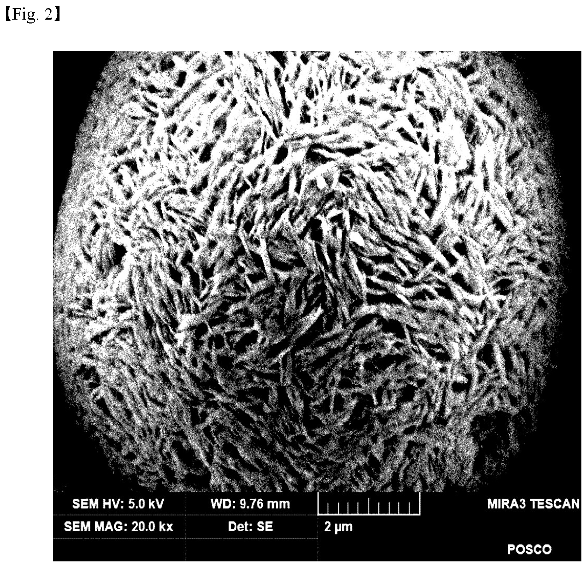

The morphology of the precursor (without first calcination) obtained in Comparative Example 4 is shown in FIG. 2.

**Experimental Example 1 - SEM Analysis**

SEM analysis was performed on the positive electrode active materials obtained from Embodiments 1 and 2 and Comparative Examples 1 to 3, and the results are shown in FIGS. 2 to 7.

As shown in FIGS. 2 to 7, in the positive electrode active materials of Embodiments 1 and 2 (FIGS. 5 and 6), the spacing between primary particles is relatively large, and distinct pores are observed. This confirms that the BET specific surface area of the active materials falls within the above-described range, contributing to improved electrochemical performance.

**Experimental Example 2 - Electrochemical Evaluation**

**(1) Fabrication of Coin-Type Half Cells**

Coin-type CR2032 half-cells were fabricated using the positive electrode active materials prepared in the above embodiments and comparative examples.

Specifically, the positive electrode active material, conductive agent (acetylene black FX35, Denka), and polyvinylidene fluoride binder (KF9709) were mixed at a weight ratio of 95:2:3. The mixture was added to N-methyl-2-pyrrolidone (NMP) solvent to prepare a positive electrode slurry having a solid content of about 65-69 wt%.

The slurry was coated on an aluminum foil (Al foil, 20 $\mu$m thick) serving as the positive electrode current collector using a doctor blade, dried, and roll-pressed to prepare a positive electrode. The loading amount of the electrode was approximately 14-15 mg/cm$^2$, and the roll-pressed density was about 3.5 g/cm$^3$.

A 2032 coin-type half-cell was assembled using the positive electrode, a lithium metal negative electrode (400 $\mu$m thick, NEBA), an electrolyte, and a polypropylene/polyethylene separator. The electrolyte was prepared by dissolving 1M LiPF$_6$ in a mixed solvent of ethylene carbonate, dimethyl carbonate, and diethyl carbonate (EC:DMC:DEC = 1:2:1 vol%) and adding 2 wt% vinylene carbonate (VC).

**(2) Charge/Discharge Performance Evaluation**

The coin-type half cells fabricated above were aged at 25°C for 24 hours and then subjected to charge/discharge testing.

Capacity evaluation was performed based on a reference capacity of 200 mAh/g. Charge/discharge was carried out under CC/CV conditions at 2.5-4.45 V with a cutoff of 1/20C.

The initial discharge capacity after 0.1C charge and 0.1C discharge was measured, and the initial Coulombic efficiency was calculated. The results are shown in Table 1 below.

Table 1 also shows the properties of the pre-calcined materials (precursors) and the second-calcined active materials prepared in Embodiments 1 and 2 and Comparative Examples 1, 2, and 4.

[Table 1]

| Classification | First Calcination Temperature (°C) | Pre-Calcined Material (Precursor) | | Final Calcined Product (Active Material) | | | | | | | |
|---|---|---|---|---|---|---|---|---|---|---|---|
| | | Ignition Loss (%) | BET Specific Surface Area ($m^2$/g) | Moisture Content (ppm) | Particle Size (D50, $\mu$m) | BET Specific Surface Area ($m^2$/g) | LiOH (wt%) | $Li_2CO_3$ (wt%) | Crystallite Size (nm) | (Crystallite Size/BET)/100 | (BET/D50)*100 |
| Embodiment 1 | 400 | 27 | 25.4 | 1044 | 9.9 | 0.36 | 0.38 | 0.54 | 125 | 3.47 | 3.64 |
| Embodiment 2 | 350 | 22 | 24.5 | 3650 | 9.8 | 0.34 | 0.36 | 0.55 | 123 | 3.62 | 3.47 |
| Comparative example 1 | 500 | 27 | 20.2 | 987 | 10.6 | 0.31 | 0.36 | 0.61 | 139 | 4.48 | 2.92 |
| Comparative example 2 | 250 | 15 | 10.2 | 5200 | 9.6 | 0.32 | 0.38 | 0.55 | 121 | 3.66 | 3.33 |
| Comparative example 4 | 0 | 0 | 5.0 | 1369000 | 9.5 | 0.27 | 0.41 | 0.67 | 112 | 4.15 | 2.84 |

It was confirmed that the pre-calcined materials (precursors) of Examples 1 and 2 exhibited higher BET specific surface areas compared to those of Comparative Examples 1, 2, and 4. Although the first calcination temperature of Comparative Example 1 was higher than that of Example 1, the BET specific surface area was instead reduced.

The second-calcined products (cathode active materials) of Examples 1 and 2 exhibited reduced moisture contents compared to those of Comparative Examples 2 and 4, which applied relatively lower first calcination temperatures. As shown in Table 1, as the first calcination temperature increased, the particle size (D50) of the cathode active material increased slightly. In addition, the BET specific surface areas of the cathode active materials of Examples 1 and 2, in which the first calcination temperatures were within the range of 350 to 400 °C, increased critically, whereas in Comparative Example 1, in which the first calcination was performed at a higher temperature of 500 °C, the BET specific surface area decreased instead. Further, the total weight fraction of lithium residual by-products also exhibited a critical decrease in Examples 1 and 2.

Table 2 below shows the electrochemical properties of the cathode active materials according to Examples 1 and 2 and Comparative Examples 1, 2, and 4.

[Table 2]

| Classification | Charge Capacity (0.1C, mAh/g) | Discharge Capacity (0.1C, mAh/g) | Rate Capability (2.0C/0.1C, %) |
|---|---|---|---|
| **Embodiment 1** | 226.2 | 198.8 | 88.7 |
| **Embodiment 2** | 225.5 | 198.3 | 88.5 |
| **Comparative example 1** | 227.8 | 196.1 | 86.5 |
| **Comparative example 2** | 225.2 | 197.9 | 86.4 |
| **Comparative example 4** | 225.1 | 197.1 | 84.0 |

It was confirmed that the cathode active materials of Examples 1 and 2 exhibited a critical increase in the 0.1C discharge capacity and in the 2.0C/0.1C rate capability compared with the cathode active materials of Comparative Examples 1 to 4. It can be understood that the electrochemical characteristics were improved as described above as the moisture content of the cathode active material decreased and the specific surface area increased.

**Claims**

1. A positive electrode active material for a lithium secondary battery, which satisfies the following Equation 1:

[Equation 1]

$$3.35 \leq (\text{crystallite size} / \text{BET}) / 100 \leq 3.65.$$

2. The positive electrode active material of claim 1,
   wherein the BET specific surface area of the positive electrode active material is 0.33 $m^2$/g or greater.

3. The positive electrode active material of claim 1,
   wherein the crystallite size of the positive electrode active material is in a range from 122 nm to 138 nm.

4. The positive electrode active material of claim 1,
   wherein the moisture content of the positive electrode active material is 3700 ppm or less.

5. The positive electrode active material of claim 1,
   wherein the positive electrode active material satisfies the following Equation 2:

[Equation 2]

$$3.35 \leq (\text{BET} / \text{D50}) \times 100 \leq 3.80.$$

6.  The positive electrode active material of claim 1,

    wherein a total content of residual lithium by-products is 0.92 wt% or less based on the total weight of the positive electrode active material,
    and wherein the positive electrode active material comprises LiOH and $Li_2CO_3$ as the residual lithium by-products.

7.  The positive electrode active material of claim 1,
    wherein a molar content of nickel among the metals included in the positive electrode active material is 80 mol% or greater.

8.  A method for manufacturing a positive electrode active material for a lithium secondary battery, comprising:

    first calcining a mixture at a temperature in a range from 350°C to 400°C to obtain a pre-calcined material; and
    second calcining the pre-calcined material at a temperature in a range from 700°C to 900°C to obtain a lithium metal oxide that satisfies the following Equation 1:

    [Equation 1]

    $$3.35 \leq (\text{crystallite size} / \text{BET}) / 100 \leq 3.65.$$

9.  The method of claim 8,
    wherein an ignition loss of the pre-calcined material is in a range from 22% to 27%.

10. The method of claim 8,
    wherein the BET specific surface area of the pre-calcined material is 20.5 $m^2$/g or greater.

11. The method of claim 8,
    wherein the first calcination is performed in an atmosphere having an oxygen ($O_2$) concentration of 21% and a carbon dioxide ($CO_2$) concentration of 10 ppm or less.

12. The method of claim 8,
    wherein the first calcination is performed for a duration in a range from 8 hours to 12 hours.

13. The method of claim 8,
    wherein the second calcination is performed for a duration in a range from 15 hours to 22 hours.

14. The method of claim 8,
    wherein a molar content of nickel among the metals included in the metal hydroxide precursor is 80 mol% or greater.

【Fig. 1】

FIG. 1

<Weight change of the positive electrode active material during the calcination reaction>

【Fig. 2】

SEM HV: 5.0 kV　WD: 9.76 mm　MIRA3 TESCAN
SEM MAG: 20.0 kx　Det: SE　2 µm
POSCO

【Fig. 3】

【Fig. 4】

【Fig. 5】

【Fig. 6】

【Fig. 7】

## INTERNATIONAL SEARCH REPORT

| International application No. |
| --- |
| **PCT/KR2023/015839** |

| A. | CLASSIFICATION OF SUBJECT MATTER |
| --- | --- |
| | **H01M 4/525**(2010.01)i; **H01M 4/505**(2010.01)i; **C01G 53/00**(2006.01)i; **H01M 4/02**(2006.01)i |

According to International Patent Classification (IPC) or to both national classification and IPC

| B. | FIELDS SEARCHED |
| --- | --- |

Minimum documentation searched (classification system followed by classification symbols)

H01M 4/525(2010.01); H01M 10/052(2010.01); H01M 10/0587(2010.01); H01M 4/131(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극 활물질(cathode active material), 결정립 크기(grain size), BET 비표면적(BET surface area), 소성(sinter)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2117621 B1 (LG CHEM, LTD.) 02 June 2020 (2020-06-02)<br>See claims 1, 3-4, 6-8 and 10; and paragraphs [0116], [0121], [0123], [0126], [0130], [0188] and [0201]. | 1-14 |
| Y | KR 10-2021-0151085 A (SUMITOMO CHEMICAL CO., LTD.) 13 December 2021 (2021-12-13)<br>See claims 3, 5 and 7-8; and paragraphs [0239]-[0241]. | 1-14 |
| A | US 2017-0187031 A1 (SUMITOMO CHEMICAL COMPANY, LIMITED et al.) 29 June 2017 (2017-06-29)<br>See entire document. | 1-14 |
| A | KR 10-2017-0038485 A (LG CHEM, LTD.) 07 April 2017 (2017-04-07)<br>See entire document. | 1-14 |
| A | KR 10-2023-0064454 A (LG ENERGY SOLUTION, LTD.) 10 May 2023 (2023-05-10)<br>See entire document. | 1-14 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **27 May 2024** | **28 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/015839**

| Patent document cited in search report | | | Publication date (day/month/year) | Patent family member(s) | | | Publication date (day/month/year) |
|---|---|---|---|---|---|---|---|
| KR | 10-2117621 | B1 | 02 June 2020 | CN | 108336326 | A | 27 July 2018 |
| | | | | CN | 108336326 | B | 08 July 2022 |
| | | | | KR | 10-2018-0077081 | A | 06 July 2018 |
| KR | 10-2021-0151085 | A | 13 December 2021 | CN | 113677631 | A | 19 November 2021 |
| | | | | CN | 113677631 | B | 31 October 2023 |
| | | | | EP | 3954661 | A1 | 16 February 2022 |
| | | | | EP | 3954661 | A4 | 19 April 2023 |
| | | | | JP | 2020-172422 | A | 22 October 2020 |
| | | | | JP | 6659895 | B1 | 04 March 2020 |
| | | | | US | 2022-0173392 | A1 | 02 June 2022 |
| | | | | WO | 2020-208963 | A1 | 15 October 2020 |
| US | 2017-0187031 | A1 | 29 June 2017 | CN | 106463721 | A | 22 February 2017 |
| | | | | CN | 106463721 | B | 03 March 2020 |
| | | | | EP | 3151316 | A1 | 05 April 2017 |
| | | | | EP | 3151316 | A4 | 31 January 2018 |
| | | | | EP | 3151316 | B1 | 29 November 2023 |
| | | | | JP | 2017-182665 | A1 | 20 April 2017 |
| | | | | JP | 6549565 | B2 | 24 July 2019 |
| | | | | KR | 10-2017-0009876 | A | 25 January 2017 |
| | | | | KR | 10-2379798 | B1 | 28 March 2022 |
| | | | | US | 10938019 | B2 | 02 March 2021 |
| | | | | WO | 2015-182665 | A1 | 03 December 2015 |
| KR | 10-2017-0038485 | A | 07 April 2017 | CN | 107251282 | A | 13 October 2017 |
| | | | | CN | 107251282 | B | 12 March 2021 |
| | | | | EP | 3249723 | A1 | 29 November 2017 |
| | | | | EP | 3249723 | A4 | 02 May 2018 |
| | | | | EP | 3249723 | B1 | 05 December 2018 |
| | | | | JP | 2018-521456 | A | 02 August 2018 |
| | | | | JP | 6562576 | B2 | 21 August 2019 |
| | | | | KR | 10-1913897 | B1 | 28 December 2018 |
| | | | | US | 10862156 | B2 | 08 December 2020 |
| | | | | US | 2018-0048015 | A1 | 15 February 2018 |
| | | | | WO | 2017-057900 | A1 | 06 April 2017 |
| KR | 10-2023-0064454 | A | 10 May 2023 | WO | 2023-080643 | A1 | 11 May 2023 |

Form PCT/ISA/210 (patent family annex) (July 2022)